# EUROPEAN PATENT APPLICATION

(11) **EP 1 968 176 A1**
(43) Date of publication of application: **10.09.2008**
(21) Application number: 08075127.4
(22) Date of filing: 20.02.2008
(51) Int. Cl.: H02K 49/10

(54) **Magnetic repulsion coupling for transmission of a rotational movement from a driving member to a driven member**

(30) Priority: 05.03.2007 IT MI20070438
(71) Applicant: Baruffaldi S.p.A., Tribiano (MI) (IT)
(72) Inventor: Boffelli, Piercarlo, Tribiano (MI) (IT); Bellotti, Claudio, Tribiano (MI) (IT); Depoli, Erminio, Tribiano (MI) (IT); Natale, Fabio, Tribiano (MI) (IT)
(74) Representative: Raimondi, Margherita

(57) **Abstract**

Coupling for transmission of a rotational movement from a driving member (10;110;210) to a driven member (20;120;220), comprising permanent magnets (13;23) which are respectively integral with the driving member (10;110;210) and the driven member (20;120;220), said permanent magnets (13;23) having a matching polarity (N-N;S-S) and lying in respective radial planes parallel to the axis of rotation and situated opposite each other so that each pair of facing magnets produces a corresponding magnetic repulsion force.

## Description

The present invention relates to a magnetic repulsion coupling for transmission of a rotational movement from a driving member to a driven member without relative contact.

It is known in the technical sector relating to the transmission of rotational movements from a driving member to a driven member that there is the need to dampen, during transmission, the vibrations which are produced by the driving member and could damage the driven member and/or the device to which it is connected.

It is also known that, in order to find a solution to the problem, magnetically driven transmission couplings have been devised, these being able to avoid direct contact between the driving member and driven member and consequently absorb the vibrations transmitted by the former to the latter.

These known couplings are based on the provision of permanent magnets with opposite polarities N-S, arranged in planes perpendicular to the axis of rotation and respectively situated on the driving member and on the driven member so as to be frontally facing each other.

This solution, however, has drawbacks arising from the fact that only very low torque values are possible with the coupling and, in the event of relative slipping of the driving member and driven member, there is a drastic reduction in the said torque value since the N-S permanent magnets are angularly out-of-phase and, no longer being situated opposite each other, reduce considerably the relative magnetic attraction.

In addition to this, once slipping has occurred, the speed of relative rotation is such that it is no longer possible to re-establish the angular phasing unless the device is stopped and reset to its initial condition.

The technical problem which is posed, therefore, is to provide a coupling for transmission of a rotational movement from a driving member to a driven member, able to produce a substantial reduction in the vibrations transmitted from the former to the latter, so as to achieve higher drive torque values for the same dimensions and prevent irreversible angular dephasing of the driving member with respect to the driven member with a reduction in the drive torque.

In connection with this problem it is also required that this device should have small dimensions, be easy and inexpensive to produce and assemble and be able to be easily installed at any user facility using normal standardised connection means.

These results are achieved according to the present invention by a coupling for transmission of a rotational movement from a driving member to a driven member, comprising permanent magnets which are respectively integral with the driving member and the driven member, said permanent magnets having the same polarity and lying in respective radial planes parallel to the axis of rotation and situated opposite each other so that each pair of facing magnets produces a corresponding magnetic repulsion force.

Further details may be obtained from the following description of a non-limiting example of embodiment of the subject of the present invention provided with reference to the accompanying drawings in which:
- Figure 1 is an exploded view of a first example of embodiment of a mono-directional transmission coupling according to the present invention;
- Figure 2 is a perspective view of the coupling according to Fig. 1 in the assembled condition;
- Figure 3 is a cross-section along the plane indicated by the line III-III in Fig. 4;
- Figure 4 is a cross-section along the plane indicated by the line IV-IV in Fig. 3;
- Figure 5 is a cross-section similar to that of Fig. 4 of a second example of embodiment of the coupling according to the present invention;
- Figure 6 is a cross-section similar to that of Fig. 3 of a third example of embodiment of the coupling according to the present invention; and
- Figure 7 is a schematic cross-section along an axial plane of a fourth example of embodiment of the coupling according to the present invention.

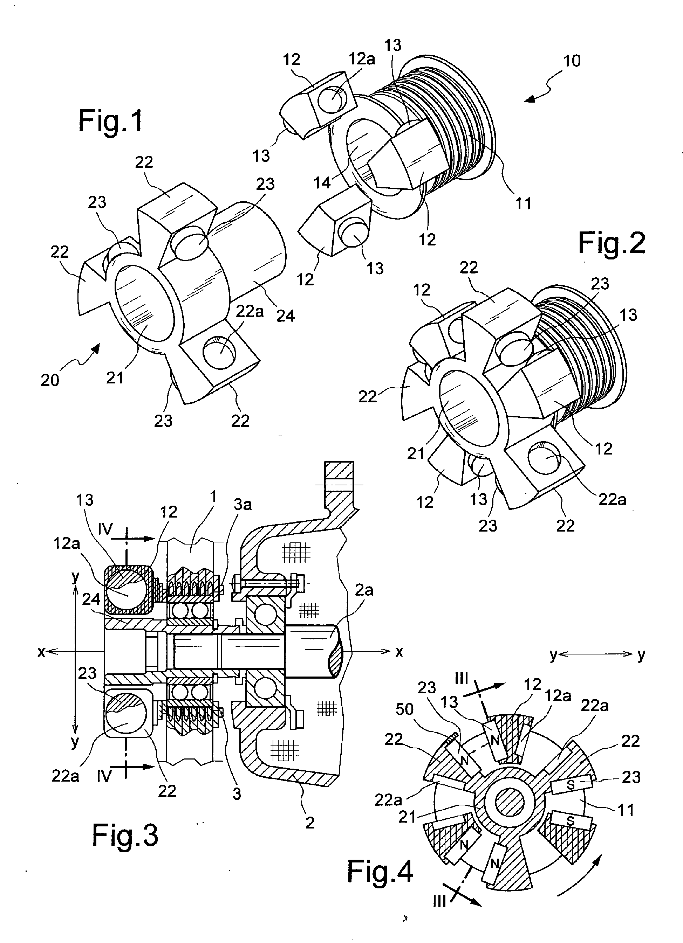

As shown in Fig. 1 and assuming for the sole sake of convenience of the description and without a limiting meaning two reference axes, in a longitudinal direction X-X, coinciding with the axis of rotation, and in a transverse/radial direction Y-Y, respectively, the transmission coupling according to the present invention comprises:
- a driving member 10 with a longitudinal extension 11 formed in the manner of a pulley and suitable for engagement with a drive belt 1 connected, for example, to the shaft of an internal-combustion engine of a vehicle.

On the opposite side to the pulley 11, the driving member 10 has a plurality of axial projections 12 - three in number in the example, arranged at 120° - each of which has formed internally a seat 12a able to contain a permanent magnet 13 which is arranged in a radial plane parallel to the axis of rotation.

The driving member 10 has internally a cylindrical through-seat 14 able to allow the insertion of a sleeve 24 integral with the hub 21 of a driven member 20 in turn provided with radial projections 22 which are integral with the hub 21 and which have formed therein a respective seat 22a able to contain a magnetic element 23 in turn arranged in a plane radial and parallel to the axis of rotation and with a polarity matching that of the corresponding permanent magnet 13 of the driving member.

Assembly of the coupling (Figs. 2 and 4) is performed by forcing coaxially the sleeve 24 of the driving member 20 onto a bearing 3, the outer thrust surface 3a of which is integral with the inner surface of the seat 14 of the driving member 10; during mounting of the driven member 20 on the driving member 10 the respective radial projections 22;12 are arranged in the correct angular position so that, alternating with each other, the respective permanent magnets 23,13 are arranged in radial planes facing each frontally in the circumferential direction.

As shown in Fig. 3, assembly of the coupling on the device to be rotationally actuated, schematically shown together with the housing 2, is performed by coaxially forcing the sleeve 24 of the driven member 20 onto the spindle 2a of the device 2 to be actuated.

An example of this device consists of an alternator of motor vehicles.

With this configuration the operating principle of the coupling is as follows:
- when the driving member 10 is rotationally operated by means of the belt 1 connected to the pulley 11, the radial driving projection 12 tends to reduce the angular space existing with the corresponding radial projection 22 of the driven member 20;
- this relative movement together is however opposed by the magnetic repulsion force which is produced between the two permanent magnets 13 and 23 with the same polarity N-N/S-S integral with the respective driving radial projections 12 and driven radial projections 22, respectively;
- said magnetic repulsion force therefore forces the driven member 20 to start rotating, propelled by the magnetic repulsion force, and to transmit consequently the movement to the part 2a of the device 2 without contact and therefore without transmission of the vibrations from the driving member, these being absorbed by the coupling.

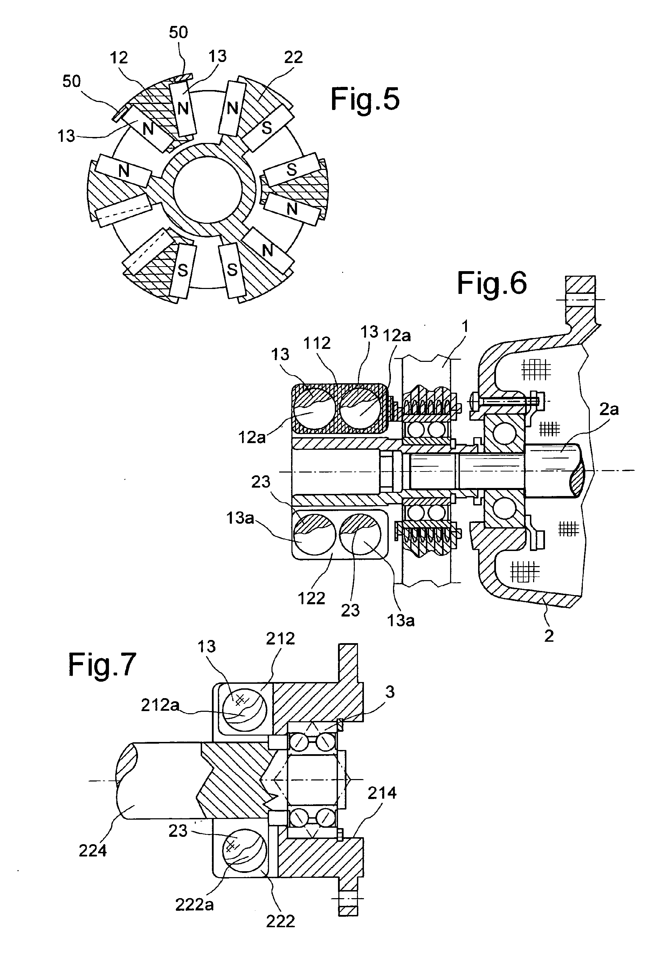

As shown, it is envisaged that the coupling may be mono-directional, namely with magnets of the driving member arranged solely on the side of the radial projection 12 situated in the same direction as the direction of rotation (Fig. 4); or alternatively (Fig. 5) the coupling may be bidirectional, namely with permanent magnets arranged on both the radial surfaces of the axial projections of the driving member, and therefore the driven member, so as to ensure transmission both through movement in a clockwise direction and through movement in an anti-clockwise direction.

Fig. 6 also shows a further variation of embodiment which envisages an extension in the longitudinal direction X-X of the projections 112 of the driving member 10 and the projections 122 of the driven member 20 so as to double the number of respective seats 12a and 23a housing the permanent magnets 13 and 23, increasing in this way proportionally the relative magnetic repulsion and therefore the drive torque of the coupling.

Fig. 7 shows a fourth example of embodiment 210 of the coupling according to the invention in which the driving member is formed by a flange 211 provided with holes 211a designed for engagement with the corresponding movement transmission device; in this case also the driving member 210 has radial projections 212 with, formed therein, seats 212a for containing magnetic elements 13; the driven member 220 is instead formed by a shaft 224 keyed onto the bearing 3 coaxially inserted inside the seat 214 of the flange 211; axial projections 222 carrying the magnetic element 13 are integral with the shaft 224.

According to preferred embodiments it is envisaged moreover being able to provide a safety stop between driving member and driven member; in the example according to Fig. 4 this stop consists of at least one shoulder 50 integral with the radial projections of the driven member 20 and circumferentially projecting from the magnet so that any contact between the projections 12 of the driving member and projections 22 of the driven member occurs against said stop, without damaging the permanent magnets 13,23.

As shown in Fig. 7, it is envisaged also that the radial projections may be made of metallic material so that the permanent magnets remain attached thereto by means of simple magnetic attraction; in another embodiment, the projections may be made of non-magnetic material, in which case it will be necessary to glue the permanent magnets to the bottom of the respective seat.

In both cases it is preferred to alternate pairs with one polarity (N-N) with pairs having an opposite polarity (S-S) so that the magnets inserted in the same radial projection 12,22 are attracted to each other, increasing the force which opposes their separation.

In the case of all the embodiments described it is envisaged moreover that the driving member and the driven member may reverse their roles should it be required to connect the device (belt or the like) for transmission of the main movement to the inner driven member instead of to the outer driven member.

In addition, it is envisaged that the bearing 3 may be replaced by an equivalent part such as a bush or the like.

It is therefore clear how the coupling according to the invention, which acts by means of magnetic repulsion driving, allows the drive torque to be increased considerably compared to that which can be obtained by a coupling based on attraction, since the matching polarity of the permanent magnets tends to increase the relative repulsion force in the event of relative angular slipping of the driving member and driven member, moreover avoiding the need to stop the coupling in order to re-establish the relative angular phasing; in fact, in the rest condition, the matching polarity of the permanent magnets situated opposite each other will tend to bring the coupling back into the angular equilibrium condition.

## Claims

1. Coupling for transmission of a rotational movement from a driving member (10;110;210) to a driven member (20;120;220), comprising permanent magnets (13;23) which are respectively integral with the driving member (10;110;210) and the driven member (20;120;220), **characterized in that** said permanent magnets (13;23) have a matching polarity (N-N;S-S) and lie in respective radial planes parallel to the axis of rotation and situated opposite each other so that each pair of facing magnets produces a corresponding magnetic repulsion force.

2. Device according to Claim 1, **characterized in that** the driving member (10;110;210) has at least one longitudinal extension (11) formed in the manner of a pulley.

3. Device according to Claim 2, **characterized in that** said driving member (10;110;210) has inside it a cylindrical through-seat (14;214).

4. Device according to Claim 1, **characterized in that** the driving member (10;110;210) envisages a plurality of axial projections (12;112;212) inside each of which a seat (12a;212a) able to contain a respective permanent magnet (13) is formed.

5. Device according to Claim 1, **characterized in that** said driven member (20;120;220) comprises means (24;224) for coaxial engagement with the driving member (20; 120; 220) .

6. Device according to Claim 5, **characterized in that** the said means for engagement with the driving member (20;120;120) are formed by a sleeve (24) extending in the longitudinal direction and integral with a hub (21) .

7. Device according to Claim 5, **characterized in that** said means for engagement with the driving member (20;120;220) consist of a shaft (24) coaxially keyed onto the said driving member.

8. Device according to Claim 1, **characterized in that** said driven member (20;120;220) comprises a plurality of axial projections (22;122;222) integral with the hub (21;121) and provided with a respective seat (22a;222a) able to contain an associated permanent magnet (23).

9. Device according to Claim 8, **characterized in that** said axial projections (12;112;212) are arranged at regular angular distances and said axial projections (22;122;222) of the driven member (20;120;220) are arranged at regular angular distances.

10. Device according to Claim 5, **characterized in that** said coaxial engagement means (24;224) of the driven member (20;120;220) are coaxially forced onto a bearing (3), the outer thrust surface (3a) of which is integral with the inner surface of the seat (14;214) of the driving member (10;11;210).

11. Device according to Claim 5, **characterized in that** said coaxial engagement means (24;224) of the driven member (20;120;220) are coaxially forced onto a bush or the like.

12. Device according to Claim 10, **characterized in that** said axial projections of the driving member (10;110;210) and the driven member (20;120;220) alternate with each other along the circumference.

13. Device according to Claim 10, **characterized in that** it is mono-directional, namely with magnets (13) of the driving member (10;110;210) arranged only on the side of the axial projection (12;112;222) situated in the same direction as the direction of rotation.

14. Device according to Claim 13, **characterized in that** it is bidirectional, namely with permanent magnets (13,23) arranged on both the radial surfaces of the axial projections (12,22;112;122;212;222) of the (20;120;220).

15. Device according to Claim 1, **characterized in that** said axial projections (112) of the driving member (110) and axial projections (122) of the driven member (120) are axially extended.

16. Device according to Claim 15, **characterized in that** said axially extended axial projections (112,122) envisage a plurality of seats (12a;22a) for containing the permanent magnet (13) arranged alongside each other in the longitudinal direction.

17. Device according to Claim 1, **characterized in that** it comprises a safety stop between the driving member (10;110;210) and the driven member (20;120;220).

18. Device according to Claim 17, **characterized in that** the stop member consists of at least one stop (50) integral with the radial projections (22) of the driven member (20;120;220) and circumferentially projecting from the magnet (23).

19. Device according to Claim 1, **characterized in that** said axial projections (12,22) carrying the magnets (13) are made of metallic material.

20. Device according to Claim 1, **characterized in that** said axial projections (12,22) carrying the magnets (13) are made of magnetically insulating material.

21. Device according to Claim 20, **characterized in that** each permanent magnet (13,23) is constrained to the respective seat (12a,13a) by means of adhesive.
